# EUROPÄISCHE PATENTSCHRIFT

(11) **EP 2 504 658 B1**
(45) Veröffentlichungstag und Bekanntmachung des Hinweises auf die Patenterteilung: **27.02.2019**
(21) Anmeldenummer: 10785402.8
(22) Anmeldetag: 26.11.2010
(51) Int. Cl.: G01B 11/00, G01B 5/012

(54) **VERFAHREN UND ANORDNUNG ZUR TAKTIL-OPTISCHEN BESTIMMUNG DER GEOMETRIE EINES MESSOBJEKTES**
METHOD AND ARRANGEMENT FOR TACTILE-OPTICAL DETERMINATION OF THE GEOMETRY OF A MEASUREMENT OBJECT
PROCÉDÉ ET SYSTÈME DE DÉTERMINATION TACTILE-OPTIQUE DE LA GÉOMÉTRIE D'UN OBJET À MESURER

(30) Priorität: 26.11.2009 DE 102009044673; 23.12.2009 DE 102009059298; 24.03.2010 DE 102010016127
(43) Veröffentlichungstag der Anmeldung: 03.10.2012
(73) Patentinhaber: Werth Messtechnik GmbH, 35394 Giessen (DE)
(72) Erfinder: CHRISTOPH, Ralf, 35394 Gießen (DE); ANDRÄS, Matthias, 61197 Florstadt (DE); SCHMIDT, Ingomar, 35418 Buseck (DE); HECHLER, Markus, 35583 Wetzlar (DE); HOPP, Benjamin, 35390 Gießen (DE)
(74) Vertreter: Stoffregen, Hans-Herbert
(86) Internationale Anmeldenummer: PCT/EP2010/068327
(87) Internationale Veröffentlichungsnummer: WO 2011/064339

(56) Entgegenhaltungen:
- WO-A1-02/25206
- WO-A1-2007/079600
- DE-A1- 10 108 774
- DE-A1-102005 037 160
- US-A- 5 825 666

## Beschreibung

Die Erfindung bezieht sich auf ein Verfahren zur Bestimmung von Strukturen und/oder einer Geometrie eines Objektes, wie Werkstücks, in einem Koordinatenmessgerät mittels eines taktil-optischen Messverfahrens, wobei die Position eines von einer Tasterverlängerung ausgehenden Antastformelements oder zumindest einer diesem zugeordneten von der Tasterverlängerung ausgehenden ersten Marke in X- und Y-Richtung des Koordinatenmessgerätes mittels eines ersten Sensors mit einem optisch lateral messenden Messverfahren und die Position des Antastformelementes oder zumindest der diesem zugeordneten ersten Marke in zumindest einer zu der X- und Y-Richtung senkrecht verlaufenden Z-Richtung des Koordinatenmessgeräts mit zumindest einem Abstandssensor bestimmt werden. Das erfindungsgemäße Verfahren ist im Anspruch 1 beansprucht.

Gegenstand der Erfindung ist auch eine Anordnung zur Bestimmung von Strukturen und/oder Geometrie eines Objektes wie Werkstücks in in einem Koordinatenmessgerät mit einem taktil-optischen Messverfahren umfassend ein von einer Tasterverlängerung ausgehendes Antastformelement, einen ersten Sensor, der geeignet ist, die Position eines Antastformelementes oder zumindest eine dem Antastelement zugeordneten ersten Marke in X- und Y-Richtung des Koordinatenmessgerätes mit einem optisch lateral messenden Verfahren zu bestimmen, einen Abstandssensor der geeignet ist, die Position des Antastformelements oder der ersten Marke in zumindest eine zu der X- und Y-Richtung zu bestimmen, ein Auswertesystem, dass geeignet ist, aus den Messdaten- oder Signale des Abstandssensors und den Messdaten des ersten Sensors die dimensionale Position des Antastformelementes oder der ersten Marke zu bestimmen. Die erfindungsgemäße Anordnung ist im Anspruch 6 beansprucht.

Nach der EP-B-1 082 581 wird eine Struktur eines Objektes mittels eines einem Koordinatenmessgerät zugeordneten Antastformelements gemessen, dessen Position mittels eines optischen Sensors erfasst wird. Es handelt sich folglich um ein taktil-optisches Messverfahren. Dabei sind Sensor und Taster als eine gemeinsam verstellbare Einheit ausgebildet. Diese kann nach der WO-A-02/025206 von einem Dreh-Schwenkgelenk ausgehen. Auf die Offenbarungen in diesen Schriften wird ausdrücklich Bezug genommen.

Aus dem DE-U-298 08 683 wird die Raumposition eines Tasters mittels zweier optischer Sensoren bestimmt, von denen einer die Z-Koordinate und der andere die X, Y-Koordinaten misst. Gleiches ergibt sich aus der DE.Z.: tm-Technisches Messen 66 (1999) 12, S. 1- 5, Schwenke et al.: "Opto-taktiler Sensor zur 2D- und 3D-Messung kleiner Strukturen mit Koordinatenmessgeräten".

Bei den bisher bekannten optisch-taktilen Messsystemen, im Stand der Technik als Fasertaster bekannt, erfolgt die 3-dimensionale Erfassung eines Antastformelementes oder einer diesem zugeordneten Marke mittels eines oder mehrerer zueinander nahezu senkrecht angeordneter ein- oder zweidimensionaler optischer Messsysteme wie CCD- oder CMOS- Bilderfassungseinrichtungen oder aus der Kombination einer zweidimensionalen Bilderfassungseinrichtung und eines eindimensionalen relativ messenden Abstandssensors wie Homodyn-Interferometer (WO-A-2007/033811) oder auf Basis einer Specklebildauswertung (DE-A-10 2005 021 645).

Ein am "National Physical Laboratory" (NPL) entwickelten 3D-Taster zeigt ein nahezu isotropes Verhalten der Antastkraft, allerdings nur für einen steifen Taststift und unter Verwendung piezoelektrischer Auswertesysteme für die Bestimmung der Verkippung und Auslenkung des Taststiftes. Aus 6 gemessenen Biegungen bzw. Dehnungen von dünnen rechteckförmigen Sensorelementen wird die Auslenkung in den drei Raumrichtungen und die Verkippung um diese berechnet (Prof. Richard Leech, NPL, United Kingdom - "Development of a 3D vibrating micro-CMM probe using an active triskelion flexure" on "Microparts" Interest Group Workshop, 28.-29. Oktober 2009, National Physical Laboratory, Teddington, UK).

Eine ähnliche Funktion besitzt ein von der Firma "XPRESS Precision Engineering" vertriebene 3D-Mikrotaster. Der steife Taststift ist bei diesem auf einem Silizium-Chip befestigt und die Auslenkung wird mit Hilfe piezoresistiver Elemente ermittelt, die im Silizium-Chip integriert sind (Ernst Treffers, Director Business Development, Xpress Precision Engineering, The Netherlands -"Gannen series: 3D tactile probes for microparts" on "Microparts" Interest Group Workshop, 28.-29. Oktober 2009, National Physical Laboratory, Teddington, UK und Internetseite www.xpresspe.com und www.xpresspe.com/probe2.htm am 16.12.2009).

Aus der DE-A-101 08 774 ist eine bereichsweise lichtdurchlässige Halterung für einen taktilen Tastkopf bekannt. Die Halterung ermöglicht mit einer oberhalb des Tastkopfes angeordneten Beobachtungskamera durch die zur Befestigung und Auswertung der Auslenkung eines Taststiftes notwendige Trägerkomponente hindurch die Spitze des Taststiftes zu beobachten, um die taktile Messung, insbesondere die sonst schwer zu beobachtende Annäherung an die Werkstückoberfläche zu verfolgen. Die Beobachtungskamera kann nicht zur Messung der Position der Tastspitze eingesetzt werden, enthält also keine Mittel zur Bildverarbeitung.

Nachteilig bei den bekannten Verfahren ist, dass die relative oder absolute Position des zu erfassenden Elementes wie Antastformelement oder einer diesem zugeordneten Marke nicht oder nur unzureichend genau oder schnell optisch erfasst wird.

Nicht gelöst ist dabei insbesondere, dass eine schnelle Auswertung der relativen oder absoluten Position des zu erfassenden Elementes in Abbildungsrichtung des zur Bestimmung der lateralen Auslenkung des zu erfassenden Elementes eingesetzten optischen Bilderfassungssystems erfolgt oder die Bewegungen um die rotatorischen Freiheitsgrade erfasst werden.

Des Weiteren existieren keine Lösungen, um die Reflexion des Messstrahls eines Interferometers oder Abstandssensors oder Sensors nach einem Fokusverfahren, wie Autofokus, oder Bildverarbeitungssensors auf der Oberfläche des zu erfassenden Elementes wie Antastformelement oder einer diesem zugeordneten Marke zu erzeugen.

Aus der US-A-5,825,666 ist ein Koordinatenmessgerät mit einem starren Taster bekannt, der zwei Zielmarken aufweist, um über diese Rückschlüsse auf die räumliche Lage des Antastformelementes ziehen zu können.

Die WO-A-02/106765 bezieht sich auf ein Verfahren zum Messen von Gegenständen, wobei mittels eines Laserabstandssensors Z-Position des Antastformelementes eines taktil-optischen Tasters gemessen wird. Ferner kann ein Bildverarbeitungssensor vorgesehen sein.
Der WO-A-02/25206 sind eine Anordnung und ein Verfahren zum opto-taktilen Messen von Strukturen eines Objektes mittels eines Koordinatenmessgerätes zu entnehmen. Ein erster optischer Sensor und ein mechanischer Taster mit Antastformelement sind zu einer Einheit integriert. Um das Antastformelement dreidimensional zu messen, wird ein zweiter optischer Sensor gleicher Bauart benutzt, dessen optische Achse senkrecht zu der des ersten optischen Sensors verläuft.
Eine gattungsgemäße Vorrichtung ist aus der WO-A-03/008905 bekannt. Mit dem Abstandssensor werden wahlweise die Position eines Antastformelementes oder die Oberflächeneigenschaften eines Objektes gemessen. Alternativ kann die Position des Antastformelementes mittels eines Bildverarbeitungssensors gemessen werden, wobei der Abstandssensor sodann zur Beleuchtung des Antastformelementes dient.
Nach der US-B-6,441,910 weist ein Koordinatenmessgerät einen mechanischen Taster und einen optischen Sensor auf, um ein Objekt opto-taktil messen zu können. Mechanischer Taster und optischer Sensor sind als Einheit verstellbar.
Zum Messen eines Objektes mittels eines Koordinatenmessgerätes wird nach der DE-A-198 05 892 die Position eines Tasters mittels einer optischen Erfassungseinrichtung gemessen, die unabhängig vom Taster verstellbar ist.

Nach der EP-A-0 965 816 werden geometrische Strukturen eines Objektes mit einer optischen Erfassungseinrichtung und einem Taster gemessen, die unabhängig voneinander beweglich sind.

Zuvor bekannte Verfahren bzw. Koordinatenmessgeräte beziehen sich folglich dem Grunde nach allein auf Teillösung der Gesamtproblematik, um eine exakte Raumlagebestimmung des Antastformelementes sicherzustellen.

Nach der WO-A-98/57121 wird für eine 3-dimensionale Bestimmung der Tastelementposition ein fotogrammetrisches Verfahren auf der Basis der Triangulationen angewendet.

Ein Koordinatenmessgerät mit mechanisch abtastenden Sensoren ist der DE-A-43 27 250 zu entnehmen. Dabei kann eine visuelle Kontrolle des mechanischen Antastvorgangs mit Hilfe eines Monitors erfolgen, um eine Zerstörung des Tasters zu vermeiden.

In der US-A-4,972,597 wird ein Koordinatenmessgerät mit einem Taster beschrieben, dessen Tasterverlängerung mittels einer Feder in ihrer Position vorgespannt ist.

Nach der WO-A-99/63301 wird eine Struktur eines Objektes mittels eines einem Koordinatenmessgerät zugeordneten Antastformelements gemessen, dessen Position mittels eines optischen Sensors erfasst wird. Dabei sind Sensor und Taster als eine gemeinsam verstellbare Einheit ausgebildet. Diese kann nach der WO-A-02/025206 von einem Dreh-Schwenkgelenk ausgehen.

Aus dem DE-U-298 08 683 wird die Raumposition eines Tasters mittels zweier optischer Sensoren bestimmt, von denen einer die Z-Koordinate und der andere die X, Y-Koordinaten misst. Gleiches ergibt sich aus der DE.Z.: tm-Technisches Messen 66 (1999) 12, S. 1- 5, Schwenke et al.: "Opto-taktiler Sensor zur 2D- und 3D-Messung kleiner Strukturen mit Koordinatenmessgeräten".

Aus der EP-B-1 528 354 sind ein Verfahren und eine Vorrichtung zum Messen eines Objekts mittels eines Koordinatenmessgeräts bekannt. Um eine dreidimensionale Lagebestimmung eines Antastformelementes bei Minimierung von Messfehlern zu ermöglichen, wird eine optische Sensorik benutzt, die einen Abstandssensor und einen Bildverarbeitungssensor mit gemeinsamem optischem Strahlengang umfasst. Beide Sensoren erfassen stets die gleiche Marke oder das Antastformelement selbst. Insbesondere ist es nicht möglich, eine Marke oder das Antastformelement mit dem Bildverarbeitungssensor zu erfassen, wenn sich die Marke, die vom Abstandssensor gemessen wird, oberhalb der Marke befindet, die vor dem Bildverarbeitungssensors erfasst werden soll, da zur Minimierung von Messfehlern die Befestigung der eingesetzten Faser nahe der Marke des Abstandssensors angeordnet ist, um laterale Verschiebungen bei der Auslenkung des Antastformelementes zu minimieren, wodurch die Befestigung die vom Bildverarbeitungssensor erfasste Marke oder das Antastformelement verdeckt. Zudem bleibt ungelöst, die vom Bildverarbeitungssensor erfasste Marke bzw. das Antastformelement zum Eigenleuchten zu bringen, da die Marke des Laserreflektors eine entsprechend notwendige Lichteinkopplung in die Faser und die unterhalb des Laserreflektors befindliche Marke oder das Antastformelement nicht erlaubt.
Der vorliegenden Erfindung liegt die Aufgabe zugrunde, die Nachteile des Standes der Technik zu vermeiden und grundsätzlich eine schnelle und genaue Erfassung der relativen oder absoluten Position des zu erfassenden Elementes wie Antastformelements oder einer diesem zugeordneten Marke zu ermöglichen.

Die Aufgabe wird gelöst durch ein Verfahren nach Anspruch 1 zur Bestimmung von Strukturen und/oder einer Geometrie eines Objektes, wie Werkstücks, in einem Koordinatenmessgerät mittels eines taktil-optischen Messverfahrens, wobei die Position eines von einer Tasterverlängerung ausgehenden Antastformelements oder zumindest einer diesem zugeordneten von der Tasterverlängerung ausgehenden ersten Marke in X- und Y-Richtung des Koordinatenmessgerätes mittels eines ersten Sensors mit einem optisch lateral messenden Messverfahren und die Position des Antastformelementes oder zumindest der diesem zugeordneten ersten Marke in zumindest einer zu der X- und Y-Richtung senkrecht verlaufenden Z-Richtung des Koordinatenmessgeräts mit zumindest einem Abstandssensor bestimmt werden.

Die vorliegende Erfindung löst die Aufgabe durch den Einsatz eines absolut oder relativ messenden Abstandssensors wie Interferometer, Laserabstandssensor oder Fokussensor wie Autofokus. Vorteilhaft ist die durch den Einsatz von Interferometern erzielbare Genauigkeit im Bereich weniger Nanometer oder darunter. Ebenso sind mit Interferometern Datenraten von mehreren tausend Messwerten pro Sekunde erreichbar. Der eingesetzte Abstandssensor bestimmt die Position des Antastformelementes oder der zugeordneten Marke durch Reflexion der Messstrahlung am Antastformelement oder der zugeordneten Marke durch entsprechende Reflexionsschichten.

Es wird ein Abstandssensor oder Interferometer oder Fokussensor eingesetzt, insbesondere ein Heterodyn-Interferometer, welches, wie dem Stand der Technik entnommen werden kann, mit mehreren Wellenlängen und dadurch absolut messend arbeitet.

Die Zuführung der Messstrahlung des Interferometers erfolgt vorzugsweise durch die aus dem Stand der Technik des Fasertasters bekannte Tasterverlängerung in Form einer Lichtleitfaser wie beispielsweise Lichtwellenleiter, wobei die optisch wirksame Verbindung vorzugsweise an einem Faserende oder mittels Y-Koppler oder über eine optische vorzugsweise neutrale Teiler- bzw. Umlenkschicht eines über dem oberen Faserende angeordneten Prismas oder Dünnschicht erfolgt. Die Reflexion erfolgt am oder nahe dem zu erfassenden Element, beispielsweise an einer am oberen Faserende eingebrachten Reflexionsschicht unterhalb des Umlenkprismas oder an der verspiegelten Unterseite des Antastformelementes. Nachfolgend passiert die Messstrahlung erneut die Zuführung in entgegen gesetzter Richtung, um mit dem Referenzstrahlengang des Interferometers zu interferieren.

Parallel zur im Stand der Technik beschriebenen Auswertung der lateralen Auslenkung des zu erfassenden Elementes erfolgt senkrecht dazu die Bestimmung der absoluten Position des zu erfassenden Elementes mit Hilfe der Messdaten des Abstandssensors, welcher dazu erfindungsgemäß mit dem Messsystem zur Bestimmung der lateralen Auslenkung nahezu gleichzeitig oder synchron betrieben wird und vorzugsweise die Messdaten oder -signale an ein übergeordnetes Auswertesystem weitergibt.

Das übergeordnete Auswertesystem berechnet aus den Messdaten oder -signalen des Abstandssensors und den Messdaten des Messsystems zur Bestimmung der lateralen Auslenkung des zu erfassenden Elementes die dreidimensionale Position des zu erfassenden Elementes.

Durch die Anordnung der Tasterverlängerung und gegebenenfalls des interferometrischen Messsystems an einer Wechselschnittstelle kann das Antastformelement aus dem Strahlengang der weiteren optischen Sensoren manuell oder automatisch entfernt werden. Dadurch ist es möglich, den Bildverarbeitungssensor und die weiteren optischen Sensoren auch zur direkten Messung der Strukturen und/oder Geometrie eines Objektes wie Werkstücks einzusetzen.

Eine entsprechende Anordnung zur Umsetzung des erfindungsgemäßen Verfahrens beinhaltet dazu zumindest ein Antastformelement und vorzugsweise zusätzlich eine diesem zugeordnete Marke, ein das Antastformelement und/oder die Marke optisch 2-dimensional erfassendes Erfassungsmittel und einen die Position in der dritten Dimension erfassenden Abstandssensor.

Die Messstrahlung des interferometrischen Abstandssensors wird dem zu messenden Element wie Antastformelement oder einer diesem zugeordneten Marke vorzugsweise durch die das zu messende Element mit dem optisch 2-dimensional erfassenden Erfassungsmittel verbindenden Tasterschaft, wie Lichtwellenleiter, zugeführt.

Der eingangs erläuterte Stand der Technik, insbesondere die zweidimensionale optische Auswertung der Auslenkung eines Antastformelementes oder einer diesem zugeordneten Marke, die Befestigung eines Antastformelementes an einer flexiblen Tasterverlängerung und die Anordnung an einem Dreh-/Schwenkgelenk sowie die trennbare Befestigung an einer Wechselschnittstelle, stellt in Verbindung mit dem erfindungsgemäßen Verfahren oder der erfindungsgemäßen Anordnung ebenso einen Bestandteil der vorliegenden Erfindung dar.

Die Erfindung sieht eine isotrope Befestigung eines optisch erfassbaren Antastformelementes vor. Diese Art der Befestigung ermöglicht eine richtungsunabhängige Antastkraft bei Auslenkung des Antastformelementes durch nahezu gleiche Steifheit in allen Richtungen.

Ferner kann neben der Auslenkung auch die Rotation des Antastformelementes um jede der drei Raumrichtungen erfasst werden. Somit ist der Einsatz von Ausleger- oder Sterntaster-Konfigurationen ermöglicht.

Es besteht die Möglichkeit, dass die Beleuchtung des Antastformelementes oder einer diesem zugeordneten Marke durch eine Auflichtbeleuchtung wie Dunkelfeld- oder Hellfeldauflicht erfolgt, so dass die

Verwendung von Durchlichtbeleuchtung oder die Einkopplung von Licht in die Faser vermieden werden könnte. Die Erfindung zeichnet sich demzufolge u. a. durch ein Verfahren zur Bestimmung von Strukturen und/oder Geometrie eines Objektes wie Werkstücks mittels eines taktil-optischen Messverfahrens aus, wobei die Position eines Antastformelementes und/oder zumindest einer diesem zugeordneten Marke in zumindest einer Richtung mit einem optisch lateral messenden Verfahren, wie 2D-Bildverarbeitung, und die Position des Antastformelementes und/oder zumindest einer diesem zugeordneten Marke in zumindest einer zweiten Richtung mit zumindest einem Abstandssensor, wie Interferometer, vorzugsweise absolut messenden Heterodyninterferometer, und/oder mittels Laserabstandssensors oder Sensors nach dem Fokusprinzip, wie Autofokussensor und/oder Bildverarbeitungssensor, insbesondere seitlich messender Bildverarbeitungssensor.
Zur lateralen Bestimmung der Position des Antastformelementes und zur vertikalen Bestimmung der Position des Antastformelementes mit dem Abstandssensor können unterschiedliche Marken, vorzugsweise in unterschiedlichen vertikalen Abständen, verwendet werden. Zur lateralen Bestimmung der Position des Antastformelementes oder zumindest der diesem zugeordneten Marke mit dem optisch lateral messenden Verfahren und zur Bestimmung der Position des Antastformelementes oder zumindest der diesem zugeordneten Marke in der zweiten wie der vertikalen Richtung mit dem Abstandssensor ist vorgesehen, unterschiedliche Marken, vorzugsweise in unterschiedlichen vertikalen Abständen, zu verwenden.

Es ist vorgesehen, dass das eine Verbindungselement, vorzugsweise mehrere flexible Verbindungselemente zur Erzeugung von in zumindest zwei Richtungen unabhängiger Kräfte und/oder nahezu gleicher mechanischer Steifigkeit bei Auslenkung entsprechend dimensioniert und angeordnet sind, wobei die flexiblen Verbindungselemente vorzugsweise von einer ringförmigen Halterstruktur ausgehen und die Strahlengänge der optischen Sensoren zur Messung des Antastformelementes und/oder der zugeordneten Marke die Anordnung der flexiblen Verbindungselemente in Strahlungsrichtung durchdringt.

Des Weiteren zeichnet sich die Erfindung dadurch aus, dass die Anordnung von optischen Sensoren und flexiblen Verbindungselementen derart erfolgt, dass die Verbindungselemente stark defokussiert oder transparent, und hierdurch praktisch für die Funktion der optischen Messung unwirksam sind.

Die flexiblen Verbindungselemente können mit einer ringförmigen Halterstruktur verbunden sein.

Es kann vorgesehen sein, dass jede Sensorik in X-, Y- und/oder Z-Richtung relativ zu dem Messobjekt positionierbar ist.

Nach der Erfindung ist vorgesehen, dass die Position eines Antastformelementes oder zumindest der diesem zugeordneten Marke in zwei Richtungen mit einem optisch lateral messenden Verfahren, vorzugsweise Bildverarbeitungssensor mit Matrixkamera wie CCD- oder CMOS-Kamera, und in der dritten Richtung mit einem Abstandssensor, wie absolut oder relativ messenden interferometrischen Sensor, und/oder Laserabstandssensor und/oder Fokus sensors, wie Autofokussensor und/oder Bildverarbeitungssensor, vorzugsweise mittels Strahlumlenkung seitlich messend, bestimmt wird.

Die Position des Antastformelementes oder zumindest der diesem zugeordneten Marke in zumindest einer Richtung kann durch Erfassen der der Sensorik zugewandten Seite des Antastformelementes oder zugeordneten Marke oder Antastformelement und vorzugsweise zugeordneter zumindest einer Marke tragenden Schaftes bestimmt werden.

Es kann vorgesehen sein, dass an der der Sensorik zugewandten Seite eine Schicht wie Reflexionsschicht befestigt ist, wobei diese vorzugsweise farbselektive Eigenschaften aufweist, die so ausgelegt sind, dass die Wellenlänge der Messstrahlung des zur Bestimmung der zumindest einen Richtung eingesetzten Sensors reflektiert und vorzugsweise zusätzlich die Strahlung einer Lichtquelle abweichender Wellenlänge transmittiert wird.

Es kann vorgesehen sein, dass die Beleuchtung des Antastformelementes und/oder der zumindest einen zugeordneten Marke und/oder der der Sensorik zugewandten Reflexionsschicht erfolgt durch:
- eine Durchlichtbeleuchtung des Antastformelementes oder der Marke aus der dem Sensor gegenüberliegenden Richtung, wobei vorzugsweise die nicht die Ränder des Antastformelementes oder der Marke bedeckende Reflexionsschicht einen Schattenwurf im Bildverarbeitungssensor bewirkt, der zur Auswertung der zweidimensionalen lateralen Position verwendet wird, und/oder
- Eigenleuchten des Antastformelementes oder der Marke durch Einkopplung von Licht in das Antastformelement und/oder die Marke und/oder den Schaft, vorzugsweise seitlich mit Hilfe einer angespleißten Lichtleitfaser, die unterhalb der Reflexionsschicht angebracht ist, wobei die nicht die Ränder des Antastformelementes oder der Marke bedeckende Reflexionsschicht einen Schattenwurf im Bildverarbeitungssensor bewirkt, der zur Auswertung der zweidimensionalen lateralen Position verwendet wird, und/oder
- Eigenleuchten des Antastformelementes oder erster Marke durch Einkopplung von Licht in das Antastformelement oder die erste Marke und/oder den Schaft, vorzugsweise seitlich mit Hilfe einer angespleißten Lichtleitfaser, die unterhalb der Reflexionsschicht angebracht ist, wobei der Abstand zwischen leuchtendem Antastformelement oder erster Marke groß genug ist, dass die oberhalb befindliche Reflexionsschicht einer zweiten Marke zumindest den Rand des Antastformelementes oder der ersten Marke nicht verdeckt, und/oder
- Eigenleuchten des Antastformelementes oder der Marke durch Einkopplung von Licht in das Antastformelement oder die Marke und/oder den Schaft,
- wobei die der Sensorik zugewandte Seite der Einkopplung vorzugsweise mit einer farbselektiven Schicht beschichtet ist und vorzugsweise mit Hilfe einer über dem oberen Schaftende angeordneten optischen vorzugsweise neutralen Teiler- bzw. Umlenkschicht, und/oder
- dem Bildverarbeitungssensor zugeordnete Hellfeld- und/oder Dunkelfeldbeleuchtung und/oder
- den Messstrahl des Abstandssensors oder Interferometers.

Es kann eine getrennte Beleuchtung für das optisch lateral messenden Verfahren und das Messen in der zweiten Richtung oder in der dritten Richtung erfolgen, indem unterschiedliche Wellenlängen verwendet werden und/oder die Beleuchtung moduliert wird und/oder die Beleuchtung zeitlich abwechselnd erfolgt, wobei vorzugsweise in den Auswertestrahlengängen eine Trennung der Wellenlängen mittels mechanischer Filter, wie farbselektiven Schichten und/oder Interferenzfilter, erfolgt.

Die Messung in der dritten Richtung bringt zum Ausdruck, dass mit dem optisch lateral messenden Verfahren zwei in einer Ebene liegende Richtungen gemessen werden. Zweite und dritte Richtung sind insoweit von der Messrichtung gleich.

Die Messstrahlung des interferometrischen Messsystems kann in die Lichtleitfaser oder Lichtwellenleiter eingekoppelt werden, nachfolgend am oder nahe des Antastformelementes oder einer diesem zugeordneten Marke reflektiert werden und anschließend die Lichtleitfaser oder Lichtwellenleiter in entgegengesetzter Richtung zumindest teilweise durchlaufen und nachfolgend mit dem Referenzstrahlengang des interferometrischen Messsystems interferieren.

Die Messwerte des optisch lateral messenden Verfahrens, wie Bildverarbeitungssystem, und des zumindest einen Abstandssensors können nahezu gleichzeitig oder synchron aufgenommen werden und die Messdaten und/oder -signale an ein übergeordnetes Auswertesystem weitergegeben werden, welches aus den Messdaten und/oder Messsignalen die dreidimensionale Position des Antastformelementes oder einer diesem zugeordneten Marke berechnet.
Die Drehung und/oder Kippung des Antastformelementes um eine, zwei oder drei Raumrichtungen kann durch Messung der Positionen mehrerer zugeordneter Marken bestimmt werden, wobei die Marken mittels des optisch lateral messenden Verfahrens und/oder des zumindest einen Abstandssensors erfasst werden.

Die Drehung des Antastformelementes um die Achse des Schaftes kann durch Messung mittels zumindest eines optisch lateral messenden Verfahrens bestimmt werden, indem die Lage einer auf zumindest einer Marke aufgebrachten gerichteten Struktur oder die Positionen zumindest zweier seitlich versetzter dem Antastformelement zugeordneter Marken bestimmt wird.
Die Durchbiegung und/oder Kippung des Schaftes kann durch Messung zumindest zweier, an dem Schaft vorzugsweise übereinander angeordneter Marken mit Hilfe des optisch lateral messenden Verfahrens in zwei verschiedenen Arbeitsabständen und/oder Vergrößerungsstufen einer zugeordneten Zoomoptik oder durch zwei Kameras mit unterschiedlichen Arbeitsabständen, die wahlweise ein gemeinsames Abbildungsobjektiv benutzen, erfasst werden, wobei die untere oder erste Marke oder das Antastformelement durch Eigenleuchten beleuchtet werden kann. Die obere oder zweite Marke kann durch das obere Schaftende oder die auf diesem aufgebrachte Reflexionsschicht gebildet und durch Hellfeld- und/oder Dunkelfeldbeleuchtung beleuchtet werden.
Es kann vorgesehen sein, dass das optisch lateral messende Verfahren und der Abstandssensor zumindest teilweise den gleichen Strahlengang benutzen, wobei die Trennung der den beiden Sensoren zugeordneten Messstrahlung erfolgt, indem die beiden Messstrahlungen unterschiedliche Wellenlängen verwenden und wellenlängenselektive Teiler eingesetzt werden oder indem zyklisch nacheinander Umlenkelemente wie Umlenkspiegel abwechselnd die Messstrahlungen der beiden Sensoren einkoppeln oder indem ein zyklisch den Arbeitsabstand veränderndes optisches Element wie flexible Linse, z. B. Flüssigkeitslinse, z. B. mit 50 bis 100 Hertz schwingend, eingesetzt wird, um zyklisch abwechselnd nacheinander die Messstrahlungen der beiden Sensoren auf die verschiedenen Arbeitsabstände auszurichten.

Der lateral messende Sensor und der Abstandssensor können zumindest teilweise einen gemeinsamen Strahlengang benutzen, wobei die Trennung der Strahlverläufe beider Sensoren durch wellenlängenselektive Elemente oder durch zyklisch eingebrachte Umschaltelemente wie Umlenkspiegel oder durch zyklisch den Arbeitsabstand beeinflussende flexible Linsen wie Flüssigkeitslinsen, vorzugsweise mit 50 bis 100 Hertz schwingend, erfolgt.

Eine Trennung der Strahlverläufe ist notwendig, da unter Umständen unterschiedliche Marken durch die beiden Sensoren erfasst werden (meist in unterschiedlichem Arbeitsabstand) und getrennte Auswertung der zurückkommenden Strahlung erfolgen muss. Um dies in dem zumindest teilweise gleichen Strahlengang (Optikaufbau) zu ermöglichen, kann die Trennung der Strahlverläufe vorgenommen durch:
1. wellenlängenselektive Elemente (z. B. Teilerschichten oder -würfel). Abhängig von der Wellenlänge wird Licht reflektiert oder durchgelassen; oder
2. abwechselnd ein- und ausklappbare Umlenkspiegel, die zeitlich zwischen den beiden Strahlengängen umschalten. Die Auswertung der Sensoren muss dazu entsprechend synchronisiert werden; oder
3. zyklisches Umschalten des Arbeitsabstandes mit einer flexiblen Linse. Auch hier muss die Auswertung der Sensoren entsprechend synchronisiert werden.

Die Bewegung bzw. Auslenkung des Antastformelementes in den gegebenen sechs Freiheitsgraden kann durch Verknüpfung der Messergebnisse von zwei verschiedenen Marken bzw. Antastformelement mit zwei lateral messenden Sensoren, wie Bildverarbeitungssensoren, und einem Abstandssensor und/oder unter Vernachlässigung des Rotationsfreiheitsgrades um die Schaftachse in fünf Freiheitsgraden ermittelt werden.

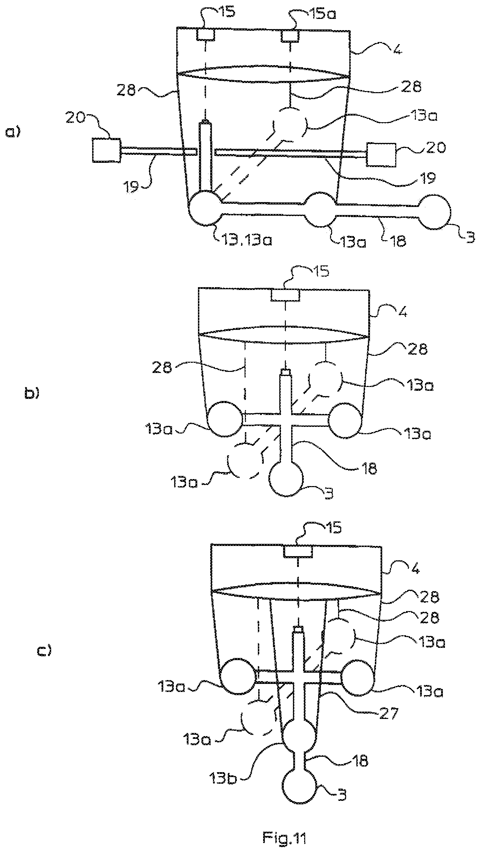

Die Bestimmung der drei Rotationsfreiheitsgrade kann erfolgen durch:
1. Kippen um die Horizontale; d. h., ein lateraler Sensor mit zwei Arbeitsabständen oder zwei laterale Sensoren unterschiedlichen Arbeitsabstandes erfassen zwei übereinander liegende Marken (Fig. 11c) oder zwei Abstandssensoren erfassen zwei nebeneinander liegende Marken (Fig. 11a),
2. Rotation um die Schaftachse; d. h. ein lateraler Sensor misst zwei nebeneinander angebrachte Marken (Fig. 11a) oder Strukturlage auf einer Marke wird gemessen.

Die Bestimmung von nur zwei Rotationsfreiheitsgeraden, d. h. Einschränkung auf insgesamt 5 Freiheitsgrade, erfolgt durch Messen von zwei übereinander angeordneten Marken, ohne eine seitlich daneben angebrachte Marke oder Struktur auf oberer Marke. Durch diese Maßnahmen ergibt sich ein einfacherer Aufbau.

Durch manuelles oder automatisches Entfernen des Antastformelementes und der gegebenenfalls zugeordneten Marke und vorzugsweise des interferometrischen Messsystems aus dem Strahlengang des optisch lateral messenden Verfahrens können die Strukturen und/oder Geometrie eines Objektes wie Werkstücks mit optisch lateral messenden Verfahren und/oder Abstandssensor direkt gemessen werden.

Zusätzlich oder alternativ zur Erfassung mit zumindest einem der Sensoren in Form des optisch lateral messenden Sensors und des Abstandssensors kann in zumindest einer Richtung die Position des Antastformelementes und/oder einer diesem zugeordneten Marke mittels zumindest eines in dem zumindest einen Verbindungselement der Halterung des Antastformelementes integrierten mechano-elektrischen Sensors erfasst werden, dessen elektrische Signale ausgewertet werden, die sich abhängig von der Verformung, wie Biegung und/oder Streckung und/oder Stauchung und/oder Torsion des zumindest einen flexiblen Verbindungselementes in einem Wert wie Amplitude, Phase oder Frequenz ändern.

Mechano-elektrische Sensoren sind aus dem Stand der Technik hinreichend bekannt, wie Dehnmessstreifen, deren Widerstand sich bei Dehnung ändert. Eine Signalauswertung erfolgt meist mit Brückenschaltung von zwei oder vier oder mehr Widerständen. Gemessen wird ein Brückensignal wie Amplitude. Bei anderen Auswerteverfahren wird ein Ausschlag des Messsignals kompensiert und das Kompensationssignal gemessen oder ein entsprechender Phasen- oder Frequenzsprung detektiert.

Es kann vorgesehen sein, dass der mechano-elektrische Sensor zumindest zwei Messelemente wie Dehnmessstreifen und/oder piezoresistive Sensoren und/oder induktive Sensoren und/oder kapazitive Sensoren enthält, wobei vorzugsweise mehrere derer Signale rechnerisch kombiniert werden.

Es kann vorgesehen sein, dass der optisch lateral messende Sensor zur Bestimmung der Position des Antastformelementes und/oder einer diesem zugeordneten Marke in zwei Richtungen und der mechano-elektrische Sensor zur Bestimmung in der dritten Richtung und/oder zur Bestimmung der Verkippung des Antastformelementes und/oder einer diesem zugeordneten Marke um eine, zwei oder drei Richtungen eingesetzt wird.

Eine die eingesetzten Sensoren umfassende Sensorik zur Bestimmung der Position des Antastformelementes und/oder der diesem zugeordneten Marke kann während der Messung in Bezug zum zu messenden Objekt bewegt werden, wobei eine Synchronisation erfolgt, vorzugsweise mit Hilfe einer Steuereinheit, die über eine Triggerleitung mit der Sensorik und den Verfahrachsen des Koordinatenmessgerätes zur Bewegung der Sensorik in Bezug zum Objekt und zumindest einer Beleuchtungseinrichtung oder einem einem Bildverarbeitungssensor als einer der Sensoren der Sensorik zugeordneten Shutter verbunden ist, zwischen:
- der Messwertaufnahme eines ersten Sensors der Sensorik für die laterale Messung, vorzugsweise der Bildaufnahme des Bildverarbeitungssensors, und
- der Messwertaufnahme zumindest eines zweiten Sensors der Sensorik für die Abstandsmessung, vorzugsweise der Bildaufnahme einer zweiten Kamera des ersten oder eines zweiten Bildverarbeitungssensors oder der Messwertaufnahme des Laserabstandssensors oder Fokussensors oder interferometrischen Sensors, und
- der Bestimmung der Positionen der Verfahrachsen zur Bewegung der Sensorik in Bezug zum Objekt und
- dem Auslösen einer blitzartiger Beleuchtung durch die Beleuchtungseinrichtung oder des dem Bildverarbeitungssensor zugeordneten Shutters.

Die eingesetzte Sensorik zur Bestimmung der Position eines Antastformelementes und/oder einer diesem zugeordneten Marke kann während der Messung in Bezug zum zu messenden Objekt bewegt werden und eine Messung, vorzugsweise mit dem Bildverarbeitungssensor, erfolgt, wenn die zu messende Position grob erreicht ist.

Auch kann vorgesehen sein, dass die eingesetzte Sensorik zur Bestimmung der Position eines Antastformelementes und/oder einer diesem zugeordneten Marke während der Messung in Bezug zum zu messenden Objekt bewegt wird und das Objekt mit dem Antastformelement scannend gemessen wird, also das Werkstück nahezu durchgehend berührt.

Zumindest das Antastformelement kann schwingen.

Das Einmessen des Sensors und das Messen mit dem Sensor zur Bestimmung der dreidimensionalen Lage des Antastformelementes oder der zugeordneten Marke kann durch Extrapolation auf eine Antastkraft = 0 Newton erfolgen, indem vorzugsweise für zumindest eine Auslenkrichtung des Antastformelementes für zumindest zwei voneinander abweichende Auslenkungsbeträge die durch den Sensor bestimmte Auslenkung ermittelt wird und hieraus eine Kennlinie ermittelt wird, die den

Zusammenhang zwischen Auslenkung und der Antastkraft bzw. einer der Antastkraft proportionalen Größe beschreibt.

Es kann vorgesehen sein, dass das erfindungsgemäße Verfahren zur Bestimmung der Rauheit des Objektes eingesetzt wird, wobei das Antastformelement vorzugsweise eine spitz zulaufende Form wie Nadel aufweist und die mit dem Abstandssensor bestimmte Rauheit anhand der Messwerte des lateral messenden Verfahrens korrigiert oder in ihrer lateralen Position zugeordnet werden. Im Gegensatz zum Stand der Technik kann durch die erfindungsgemäße Befestigung des Antastformelementes über optisch unwirksame Befestigungselemente, dieses direkt oder nahezu direkt mit dem optisch lateral messenden Sensor erfasst werden.

Eine Anordnung zur Bestimmung von Strukturen und/oder einer Geometrie eines Objektes, wie Werkstücks, in einem Koordinatenmessgerät mit einem taktil-optischen Messverfahren umfassend ein von einer Tasterverlängerung ausgehendes Antastformelement, einen ersten Sensor, der geeignet ist, die Position des Antastformelementes oder zumindest einer dem Antastformelement zugeordneten ersten Marke in X- und Y-Richtung des Koordinatenmessgerätes mit einem optisch lateral messenden Verfahren zu bestimmen, einen Abstandssensor, der geeignet ist, die Position des Antastformelements oder der ersten Marke in zumindest einer zu der X- und Y-Richtung senkrecht verlaufenden Z-Richtung zu bestimmen, ein Auswertesystem, das geeignet ist, aus den Messdaten oder -signalen des Abstandssensors und den Messdaten des ersten Sensors die dreidimensionale Position des Antastformelementes oder der ersten Marke zu bestimmen, , zeichnet sich dadurch aus, dass die Anordnung eine Halterung für zumindest ein flexibles Verbindungselement aufweist, dass die Tasterverlängerung des Antastformelements über das zumindest eine Verbindungselement befestigt ist, und dass das zumindest eine Verbindungselement derart angeordnet ist, das es vom Strahlengang des ersten Sensors in Strahlrichtung durchdrungen wird, wobei das zumindest eine Verbindungselement transparent ist und/oder in Bezug auf den ersten Sensor stark defokussiert angeordnet ist.

Es kann vorgesehen sein, dass ein die Position eines Antastformelementes und/oder zumindest einer diesem zugeordneten Marke in zumindest einer Richtung erfassendes optisch lateral messenden Verfahren, wie 2D-Bildverarbeitung, und zumindest ein die Position des Antastformelementes und/oder einer diesem zugeordneten Marke in zumindest einer zweiten Richtung erfassender Abstandssensor, wie Interferometer, vorzugsweise absolut messenden

Heterodyninterferometer, und/oder Laserabstandssensor und/oder Sensor nach dem Fokusprinzip wie Autofokussensor und/oder Bildverarbeitungssensor, insbesondere mittels Strahlumlenkung seitlich messender Bildverarbeitungssensor, und/oder in der Halterung des Antastformelementes integrierter mechano-elektrischer Sensor miteinander gekoppelt sind.

Es kann vorgesehen sein, dass zur Erzeugung von in zumindest zwei Richtungen unabhängigen Kräften und/oder nahezu gleicher mechanischer Steifigkeit bei Auslenkung zumindest zwei entsprechend dimensionierte flexible Verbindungselemente angeordnet sind, wobei die flexiblen Verbindungselemente von einer ringförmigen Halterstruktur ausgehen können und die Strahlengänge der optischen Sensoren zur Messung des Antastformelementes und/oder der zugeordneten Marke die Anordnung der flexiblen Verbindungselemente in Strahlungsrichtung durchdringen.

Dabei sind die optischen Sensoren und die flexiblen Verbindungselementen so angeordnet sind, dass die flexiblen Verbindungselemente stark defokussiert oder transparent und hierdurch praktisch für die Funktion der optischen Messung unwirksam sind.

Es kann vorgesehen sein, dass jede Sensorik in X-, Y- und/oder Z-Richtung relativ zu einem Messobjekt positionierbar ist.

Ferner können das Antastformelement und/oder zumindest eine diesem zugeordnete Marke von einem Schaft ausgehen, der vorzugsweise durch eine in zumindest einem Freiheitsgrad flexible Tasterverlängerung wie Lichtleitfaser oder Lichtwellenleiter gebildet wird.

Auch kann vorgesehen sein, dass eine Marke für einen optischen 2D-Sensor und eine Marke für einen Sensor für die dritte Richtung voneinander verschieden oder identisch sind. Insbesondere wird vorgeschlagen, dass von dem optischen 2D-Bildverarbeitungssensor und von dem die dritte Richtung messenden Sensor in Form des Abstandssensors oder eines mechano-elektrischen Sensors die gleiche Marke oder verschiedene Marken erfassbar ist bzw. sind.

Der Schaft kann eine optisch wirksame Verbindung, vorzugsweise an einem Ende des Schaftes, und/oder mittels Y-Koppler oder an einem Ende des Schaftes durch Anordnung einer optischen vorzugsweise neutralen Teiler- oder Umlenkschicht, wie Prisma, oberhalb des Schaftendes, zum interferometrischen Messsystem oder einer Lichtquelle aufweisen, welche vorzugsweise justierbar ist.

Ferner besteht die Möglichkeit, an dem Antastformelement oder nahe des Antastformelementes oder einer diesem zugeordneten Marke oder am der Sensorik zugewandten Schaftende eine Reflexionsschicht vorgesehen ist, vorzugsweise durch Beschichtung mit einer reflektierenden Schicht und/oder Einbringen einer Materialgrenze durch Variation des Materials der Tasterverlängerung.

Unabhängig hiervon kann das Antastformelement oder eine zugeordnete Marke oder der Schaft eine Reflexionsschicht tragen, welche vorzugsweise auf der der Sensorik zugewandten Seite aufgebracht ist und vorzugsweise rund und/oder kreisringförmig ist und vorzugsweise die Ränder des Antastformelementes und/oder der Marke nicht abdeckt und vorzugsweise farbselektive Eigenschaften besitzt.

Ferner besteht die Möglichkeit, dass das Antastformelement oder eine zugeordnete Marke nahezu kugel- oder tropfenförmig ist und vorzugsweise auf der der Sensorik zugewandten Seite zumindest teilweise abgeflacht ist.

Das Antastformelement und eine gegebenenfalls zugeordnete Marke und der Schaft in zumindest einer Richtung kann auslenkbar an dem zumindest einen in zumindest einem Freiheitsgrad flexiblen Verbindungselement, durch Klebung und/oder Spleißen befestigt sein und die Verbindungselemente können integrierte oder aufgebrachte mechano-elektrische Sensoren enthalten.

Flexible Verbindungselemente können einen rechteckigen, vorzugsweise schmalen und flachen, oder runden Querschnitt, vorzugsweise kleinen Durchmessers, aufweisen und vorzugsweise zumindest die Ränder des Antastformelementes und/oder der zumindest einen zugeordneten Marke für die Strahlengänge des Bildverarbeitungssensors und/oder Abstandssensors und/oder Fokussensors nicht vollständig verdecken.

Flexible Verbindungselemente können zur Erzeugung von in zumindest zwei Richtungen unabhängiger Kräfte und/oder nahezu gleicher mechanischer Steifigkeit bei Auslenkung dimensioniert und angeordnet sein, wobei die flexiblen Verbindungselemente vorzugsweise von einer ringförmigen Halterstruktur ausgehen.

Drei oder mehr flexible Verbindungselemente können kreisförmig, vorzugsweise in gleichen Winkelschritten, um die Schaftachse angeordnet sein oder zumindest ein Verbindungselement kann seitlich, vorzugsweise unter einem Winkel von 90° oder 45° zur in Richtung der Sensorik zeigenden Schaftachse, von der Schaftachse oder dem Antastformelement oder einer zugeordneten Marke ausgehen.

Flexible Verbindungselemente können in einer Ebene oberhalb des Antastformelementes oder einer ersten Marke angeordnet sein und zumindest eine weitere Marke kann oberhalb der flexiblen Verbindungselemente angeordnet sein, die ein Reflexionsschicht enthält und/oder flexible Verbindungselemente in einer Ebene zwischen einer Marke und dem Antastformelement angeordnet sind und die Marke eine Reflexionsschicht enthält.

Mehrere dem Antastformelement zugeordnete Marken können seitlich neben oder in Schaftrichtung oberhalb des Antastformelementes angeordnet sein, die nacheinander oder gleichzeitig durch den Bildverarbeitungssensor und/oder den Abstandssensor und/oder den Fokussensor und/oder den interferometrischen Sensor erfassbar sind, wobei der Bildverarbeitungssensor mit einer Optik mit veränderbarem Arbeitsabstandes und/oder veränderbarer Vergrößerung und/oder mit zwei Kameras mit unterschiedlichen Arbeitsabständen, die wahlweise ein gemeinsames Abbildungsobjektiv benutzen, verbunden sein kann.

Es kann vorgesehen sein, dass das Antastformelement und vorzugsweise eine diesem zugeordnete Marke vorzugsweise zusammen mit dem interferometrischen Messsystem trennbar an einer Wechselschnittstelle und/oder einem Drehgelenk oder Dreh-Schwenkgelenk befestigt sind und damit aus dem Strahlengang des optisch lateral messenden Sensors manuell oder automatisch entfernbar sind.

Es kann vorgesehen sein, dass ein mit einem Schaft verbundenes Antastformelement und vorzugsweise zumindest eine diesem zugeordnete Marke und zumindest ein von dem Schaft oder dem Antastformelement oder der Marke ausgehendes in zumindest einem Freiheitsgrad flexibles Verbindungselement vor einer Sensorik angeordnet ist, wobei die Sensorik besteht aus
- vorzugsweise neutraler Teilerschicht und
- daran angeschlossenem ersten Zweig, umfassend bzw. bestehend aus einer Beleuchtung erster Wellenlänge und vorzugsweise abbildendem Muster und
- daran angeschlossenem zweiten Zweig, umfassend bzw. bestehend aus durch farbselektive Schicht getrenntem
   o Abbildungsstrahlengang einer ersten Wellenlänge, wie Bildverarbeitungsstrahlengang mit erstem Arbeitsabstand und erster Kamera, und
Abbildungsstrahlengang und/oder Beleuchtungsstrahlengang einer zweiten Wellenlänge, vorzugsweise ausgeführt als erster oder zweiter Bildverarbeitungssensor mit zweitem Arbeitsabstand und vorzugsweise zweiter Kamera oder Laserabstandssensor oder interferometrischer Sensor oder Fokussensor.

Es kann vorgesehen sein, dass die folgenden Komponenten miteinander verbundenen sind und vorzugsweise über eine manuelle oder automatische Wechsel schnittstelle vor der eingesetzten Sensorik auswechselbar sind:
- mit einem Schaft verbundenes Antastformelement und vorzugsweise zumindest eine diesem zugeordnete Marke,
- zumindest ein vom Schaft oder dem Antastformelement oder der Marke ausgehendes in zumindest einem Freiheitsgrad flexibles Verbindungselement und vorzugsweise
- oberhalb des Antastformelementes oder zugeordneten Marke oder Schaftes angeordnete optische vorzugsweise neutrale Teiler- oder Umlenkschicht und vorzugsweise
- auf dem Antastformelement oder einer zugeordneten Marke oder dem der Sensorik zugewandten Schaftende angeordnete vorzugsweise farbselektive Schicht und vorzugsweise
- zumindest eine Linse wie Vorsatzlinse.
Es kann vorgesehen sein, dass das Antastformelement direkt oder indirekt mit einem mechanischen Schwingelement wie Piezoschwinger verbunden ist.
Die Sensorik umfasst den Sensor für das optisch lateral messende Verfahren und den Abstandssensor.

Weitere Einzelheiten, Vorteile und Merkmale der Erfindung ergeben sich aus den der nachfolgenden Beschreibung und den Zeichnungen zu entnehmenden bevorzugten Ausführungsbeispielen. Die Erfindung ist in den Ansprüchen 1 bis 9 definiert.

Es zeigen:
- Fig. 1: eine erste Ausführungsform einer Anordnung eines taktil-optischen Messsystems,
- Fig. 2: eine zweite Ausführungsform einer Anordnung eines taktil-optischen Messsystems,
- Fig. 3: eine weitere Ausführungsform einer Anordnung eines taktil-optischen Messsystems mit flexiblen Verbindungselementen,
- Fig. 3a: eine weitere Ausführungsform einer Anordnung des taktil-optischen Messsystems mit flexiblen Verbindungselementen und kugelförmiger Marke,
- Fig. 4: eine weitere Ausführungsform einer Anordnung eines taktil-optischen Messsystems mit Wechselschnittstelle und Piezoschwinger,
- Fig. 5: eine weitere Ausführungsform einer Anordnung des taktil-optischen Messsystems mit zwei Arbeitsabständen eines Bildverarbeitungssensors und einer Dunkelfeldbeleuchtung,
- Fig. 6: verschiedene Ausführungsformen einer Anordnung von Antastformelement, Marke und flexiblen Verbindungselementen,
- Fig. 7: eine weitere Ausführungsformen einer Befestigung und zur Einkopplung von Licht in eine einem Antastformelement zugeordneten Marke,
- Fig. 8: eine erste Ausführungsform von flexiblen Verbindungselementen und Haltestruktur,
- Fig. 9: eine zweite Ausführungsform von flexiblen Verbindungselementen und Haltestruktur,
- Fig. 10: eine dritte Ausführungsform von flexiblen Verbindungselementen und Haltestruktur,
- Fig. 11a) - c): verschiedene Ausführungsformen einer Anordnung mehrerer zu erfassender Marken, und
- Fig. 12): eine Prinzipdarstellung eines Koordinatensmessgerätes.

Bei der nachstehenden Beschreibung mehrerer Ausführungsformen werden für gleiche Elemente grundsätzlich gleiche Bezugszeichen verwendet, so dass nachstehend eine Zuordnung zwischen den Elementen und Bezugszeichen erfolgt:
- 1 -: taktil-optisches Messsystem
- 2 -: Tasterverlängerung
- 3 -: Antastformelement
- 4 -: Bildverarbeitungssensor
- 5 -: interferometrisches Messsystem
- 6 -: Halterung der Tasterverlängerung
- 7 -: Einkopplung
- 8 -: Wechselschnittstelle
- 9 -: Messstrahl des interferometrischen Messsystems 5
- 10 -: Lichtwellenleiter
- 11 -: reflektierende Schicht
- 12 -: Referenzstrahlung des interferometrischen Messsystems 5
- 13 -: Marke
- 13a -: Marke
- 13b -: Marke
- 14 -: Reflexionsschicht
- 15 -: Abstandssensor
- 15a -: Abstandssensor
- 16 -: Beleuchtung
- 17 -: neutrale Umlenk- und Teilerschicht
- 18 -: Schaft
- 18a -: Pfeil, der die Richtung der Achse des Schaftes 18 symbolisiert
- 19 -: flexible Verbindungselemente
- 19a -: flexibles Verbindungselement
- 20 -: Haltestruktur
- 21 -: farbselektive Schicht
- 21a -: Verbindungsstelle von Prisma 33 zu Schaft 18 oder Marke 13 oder Antastformelement 3
- 22 -: Messstrahl des Abstandssensors 15
- 23 -: Piezoschwinger
- 24 -: Wechselschnittstelle
- 25 -: Sensorik- und Beleuchtungseinheit
- 26 -: Abtasteinheit
- 27 -: Arbeitsabstand einer zweiten Strahlung bzw. eines zweiten Strahlengangs
- 28 -: Arbeitsabstand einer ersten Strahlung bzw. eines ersten Strahlengangs
- 29 -: Dunkelfeldbeleuchtung
- 30 -: Oberseite des Schaftes 18
- 31 -: Lichtquellen für Dunkelfeldbeleuchtung
- 32 -: abgeflachte Oberseite von Marke 13 oder Antastformelement 3
- 33 -: Prisma
- 34 -: mechano-elektrische Sensorelemente

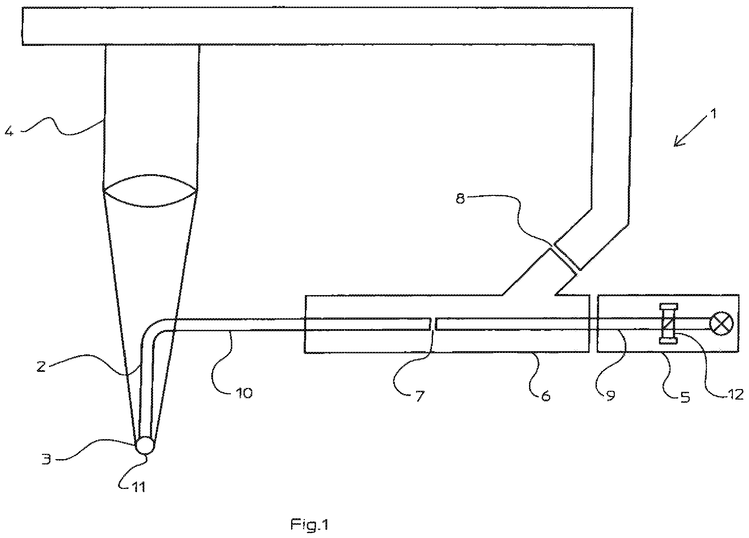

Fig. 1 zeigt ein erfindungsgemäßes taktil-optisches Messsystem 1 umfassend eine Tasterverlängerung 2 wie Lichtleitfaser oder -wellenleiter, ein daran befestigtes Antastformelement 3, einen Bildverarbeitungssensor 4 und ein interferometrisches Messsystem 5. Eine Halterung 6 der Tasterverlängerung 2 ist über eine Einkopplung 7 mit dem interferometrischen Messsystem 5 verbunden und trennbar über die Wechselschnittstelle 8 indirekt mit dem Bildverarbeitungssensor 4 verbunden. Der Bildverarbeitungssensor 4 erfasst die Position des Antastformelementes 3 optisch in zwei Richtungen, und zwar im Ausführungsbeispiel in der Ebene, die die Zeichenebene senkrecht schneidet und horizontal verläuft. Ein Messstrahl 9 des interferometrischen Messsystems wird an einem Ende des Lichtwellenleiters 10, welcher die Tasterverlängerung 2 bildet, eingekoppelt und am Antastformelement 3 reflektiert. Das Antastfonnelement 3 ist dazu an der Unterseite 11 mit einer reflektierenden Schicht versehen. Nach der Reflexion verläuft die Messstrahlung in entgegengesetzter Richtung durch den Lichtwellenleiter 10 zurück in das interferometrische Messsystem 5 und interferiert mit einer Referenzstrahlung 12 des Interferometers 5. Durch die Ausführung des interferometrische Messsystems 5 als Heterodyninterferometer wird die absolute Position in Messrichtung des Interferometers, also in der Zeichnung die Vertikale, bestimmt. Damit wird die Auslenkung des Antastformelementes 3 bei Antastung eines Messobjektes wie Werkstücks bestimmt.

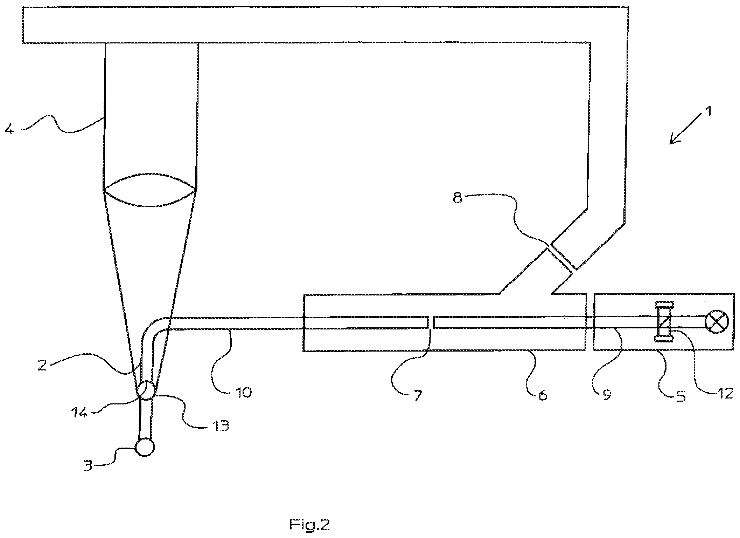

In Fig. 2 wird das erfindungsgemäße taktil-optische Messsystem 1 prinzipiell dargestellt, das zusätzlich eine dem Antastformelement 3 zugeordnete Marke 13 aufweist. Anstatt der Position des Antastformelementes 3 wird nun mit zumindest einem der beiden Messsysteme 4 und 5 die Position der Marke 13 bestimmt. Die Bestimmung der Markenposition mit dem interferometrischen Messsystem 5 erfolgt durch Reflexion der Messstrahlung 9 an einer Reflexionsschicht 14, welche nahe der Marke in dem Lichtwellenleiter 10 eingebracht ist. Die Reflexionsschicht 14 entsteht durch eine separat eingebrachte reflektierende Schicht oder den Übergang zu einem anderen Material.

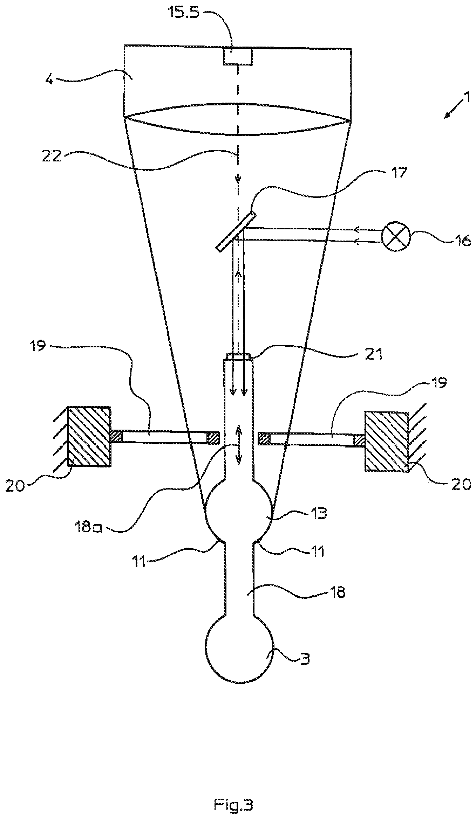

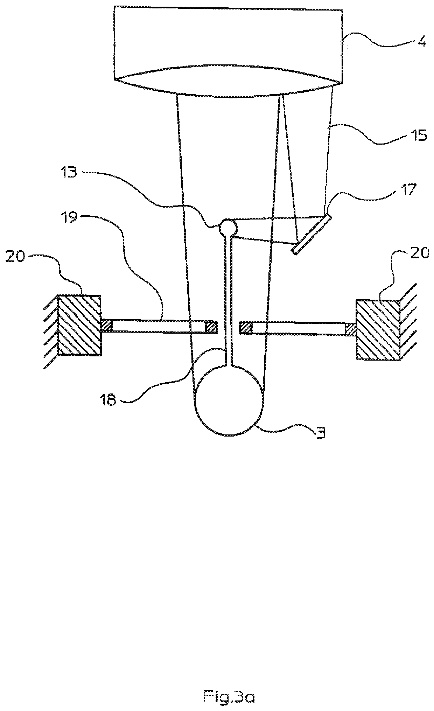

Fig. 3 zeigt eine weitere Ausführungsform des taktil-optischen Messsystems 1, umfassend den Bildverarbeitungssensor 4, zumindest bestehend aus Abbildungsoptik und Kamera wie CCD- oder CMOS-Kamera, mit integriertem Abstandssensor 15 oder interferometrischem Messsystem 5, Beleuchtung 16, neutraler Umlenk- und Teilerschicht 17, Schaft 18, farbselektive Schicht 21, Antastformelement 3, Marke 13, flexible Verbindungselemente 19 und Haltestruktur 20. Die Achse des Schaftes 18 verläuft in der Zeichenebene entlang des Pfeils 18a und entspricht etwa der Hauptachse der optischen Sensorik, also Bildverarbeitungssensor 4, interferometrisches Messsystem 5 und Abstandssensor 15. Der Abstandssensor 15 hat einen teilweise gemeinsamen Strahlengang mit dem Bildverarbeitungssensor 4. Antastformelement 3 und Marke 13 sind dabei mit dem Schaft 18 verbunden, welcher durch Kleben oder Spleißen an den flexiblen Verbindungselementen 19 befestigt ist, welche von der Haltestruktur 20 ausgehen. Weiterhin befindet sich am oberen Ende des Schaftes 18 die farbselektive Schicht 21, welche einen von der Lichtquelle 16 kommenden Lichtanteil, der an der neutralen Umlenk und - Teilerschicht 17 reflektiert wurde, transmittieren lässt und welche einen Anteil der Strahlung des Messstrahls 22 des Abstandssensors 15, der den Teiler 17 transmittiert, reflektiert.

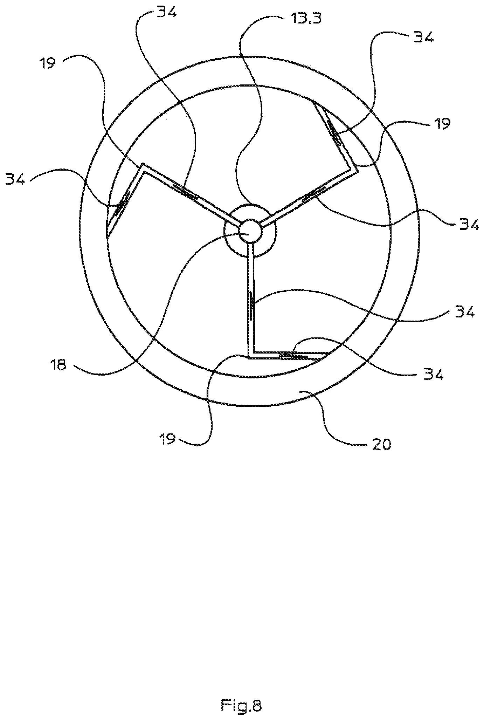

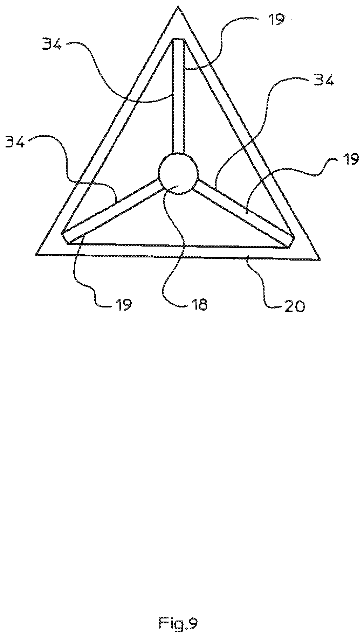

Die farbselektive Schicht 21 zeichnet sich durch ein wellenlängenselektives Reflexions- und Transmissionsverhalten aus. So wird beispielsweise Strahlung mit Wellenlängen oberhalb von ca. 550 nm bis 600 nm reflektiert und Strahlung mit Wellenlängen unterhalb von ca. 550 nm bis 600 nm hindurch gelassen. Das in den Schaft 18 eingekoppelte Licht der Lichtquelle 16 wird an einer reflektierenden Schicht 11 an der Unterseite der Marke 13 reflektiert und durch den Bildverarbeitungssensor 4 detektiert. Die flexiblen Verbindungselemente 19 sind dazu so schmal bzw. mit Aussparungen ausgeführt, das ausreichend Licht den Bildverarbeitungssensor 4 erreicht, wie auch in Fig. 8 und 9 dargestellt ist. Bei Kontakt des Antastformelementes 3 mit dem zu messenden Objekt erfasst sodann der Bildverarbeitungssensor 4 die Auslenkung der Marke 13 in den beiden nahezu rechtwinklig zur Achse 18a des Schaftes 18 liegenden Richtungen und der Abstandssensor 15 die Auslenkung der farbselektiven Schicht 21 in Richtung der Achse 18a des Schaftes 18, welche etwa der Auslenkung des Antastformelementes 3 in Richtung des Schaftes 18 entspricht. Um die Strahlengänge des Bildverarbeitungssensors 4 und des Abstandssensors 15 nach der Reflexion an den Schichten 11 bzw. 21 zur Auswertung zu trennen, wird eine weitere farbselektive Schicht eingesetzt, die sich innerhalb des gemeinsamen Strahlenganges von Bildverarbeitungssensor 4 und Abstandssensor 15 befindet und in der Figur nicht dargestellt ist.

Fig. 3a zeigt das taktil-optische Messsystem 1 in einer Ausführungsform, bei der der Abstandsensor 15 durch einen Teil der Messstrahlung des Bildverarbeitungssensors 4 oder durch einen weiteren Bildverarbeitungssensor gebildet wird. Die Position der Marke 13, für die Messung mit Bildverarbeitung kugelförmig ausgeführt, wird in Richtung des Schaftes 13 und gegebenenfalls senkrecht dazu mittels Strahlumlenkung am Spiegel 17 ermittelt. Zusätzlich kann auch ein weiterer Strahlengang durch einen weiteren Bildverarbeitungssensor oder durch weitere Abspaltung vom Bildverarbeitungssensor 4 mittels eines weiteren Umlenkspiegels eingesetzt werden, mit dem auch die fehlende Positionsinformation der Marke 13 bestimmt wird, welche in der Fig. 3a entlang der Waagerechten der Zeichenebene verläuft. Die Umlenkung erfolgt dazu senkrecht zur Richtung des Schaftes 18 und senkrecht zur Richtung der nach dem Umlenkspiegel 17 verlaufenden Strahlung, trifft die Marke 13 also senkrecht zur Zeichenebene der Fig. 3a.

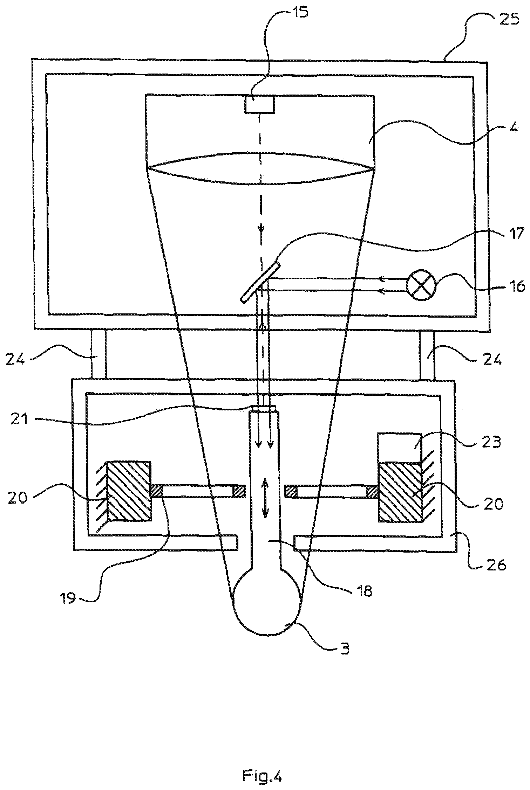

Fig. 4 zeigt eine weitere Ausführungsform einer Anordnung des taktil-optischen Messsystems 1, bei dem sich am Schaft 18 das Antastformelement 3 und die farbselektive Schicht 21 befinden. Um zumindest das Antastformelement 3 in mechanische Schwingungen zu versetzten, befindet sich beispielsweise an der Haltestruktur 20 ein Piezoschwinger 23. Dieser kann aber auch an einer anderen Stelle befestigt werden, wie beispielsweise nahe der Wechselschnittstelle 24.

Die Wechselschnittstelle 24 ermöglicht es, die Abtasteinheit 26, beispielsweise bestehend aus Schaft 18 mit farbselektiver Schicht 21 und Antastformelement 3 befestigt an flexiblem Verbindungselement 19 und Haltestruktur 20 und Piezoschwinger 23 und eventuell einzusetzender nicht dargestellter Vorsatzlinse, die beispielsweise direkt oberhalb der farbselektiven Schicht 21 angeordnet werden kann, trennbar von der Sensorik- und Beleuchtungseinheit 25, beispielsweise bestehend aus Beleuchtung 16, neutraler Umlenk- und Teilerschicht 17 und Bildverarbeitungssensor 4 mit integriertem Abstandssensor 15, zu gestalten.

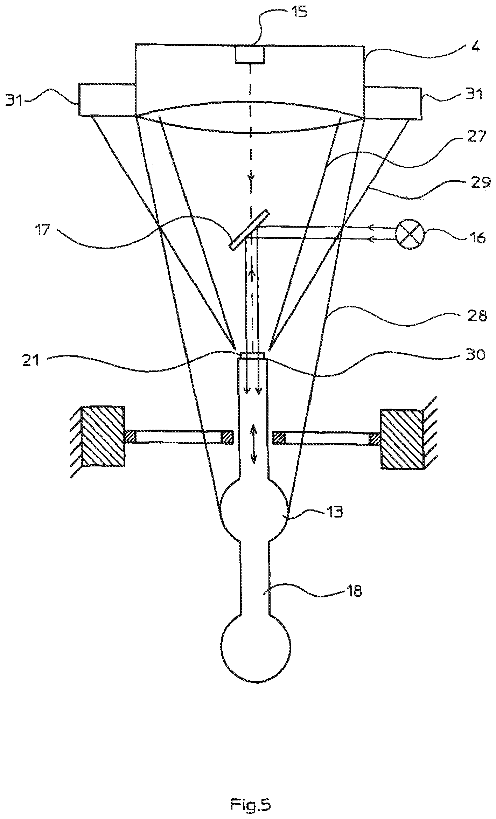

In Fig. 5 ist eine weitere Ausführungsform einer Anordnung des taktil-optischen Messsystems dargestellt, in der eine Bildverarbeitung in zwei unterschiedlichen Arbeitsabständen 27, 28 der Strahlung durchgeführt wird. Der erste Strahlengang erfasst im Arbeitsabstand 28 die Positionsänderung der Marke 13 rechtwinklig zur Achse 18a des Schaftes 18. Der zweite Strahlengang erfasst im Arbeitsabstand 27 die Positionsänderung einer zweiten Marke rechtwinklig zur Achse 18a des Schaftes 18, welche gebildet wird durch die farbselektive Schicht 21 oder die Oberseite 30 des Schaftes 18 bzw. deren Ränder. Die Beleuchtung dieser zweiten Marke wie Schicht 21 erfolgt durch eine Dunkelfeldbeleuchtung 29, die von mehreren Lichtquellen 31 ausgeht, oder einer in dem Strahlengang des Bildverarbeitungssensors 4 integrierten Hellfeldbeleuchtung, wie durch die Beleuchtung 16 und die neutrale Umlenk- und Teilerschicht 17 erzeugt, oder durch die Dunkel- und Hellfeldbeleuchtungen.

Der Bildverarbeitungssensor 4 enthält zur Auswertung der beiden Strahlengänge für die Arbeitsabstände 27 und 28 eine Optik veränderbaren Arbeitsabstandes oder zwei Kameras, die auf die beiden Arbeitsabstände 27, 28 fokussiert werden, wobei vorzugsweise ein zumindest teilweise gemeinsames Abbildungsobjektiv verwendet wird. Aus der Bestimmung der beiden Positionsänderungen der Marken 13 und 30 bzw. 21 wird die Verkippung des Schaftes 18 um die beiden senkrecht zur Achse 18a des Schaftes 18 verlaufenden Achsen bestimmt.

Alternativ können die unterschiedlichen Arbeitsabstände der Bildverarbeitungssensorik genutzt werden, um einerseits die Positionsänderung der Marke 13 zu erfassen und andererseits die Oberseite 30 des Schaftes 18 lediglich zu beobachten, um beispielsweise die Ausrichtung des Abstandssensors auf die Oberseite 30 des Schaftes 18 vorzunehmen.

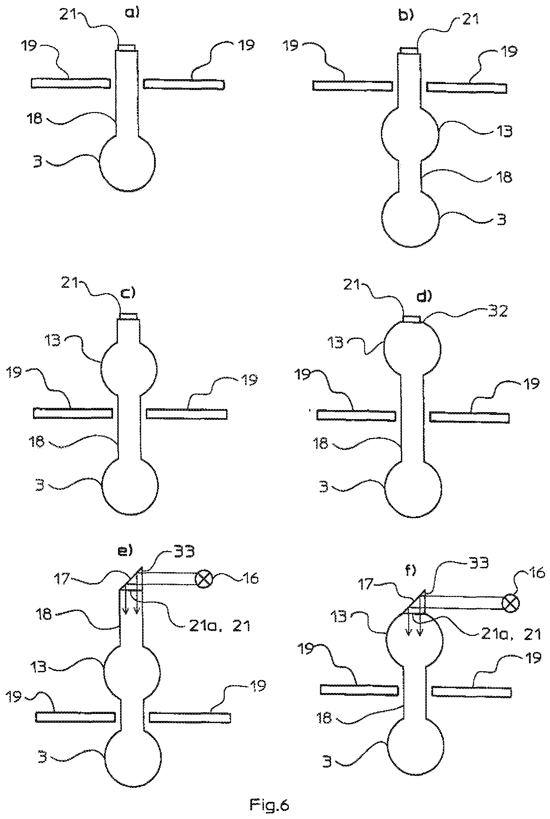

Fig. 6 zeigt verschiedene Ausführungsformen der Anordnung von Antastformelement 3, Marke 13 und flexiblen Verbindungselementen 19, über die der Schaft 18 mit der Halterung bzw. Haltestruktur 20 verbunden ist. Die Verbindungselemente 19 befinden sich demnach immer oberhalb des Antastformelementes 3, wie beispielsweise in Fig. 6 a) gezeigt, wahlweise auch oberhalb oder unterhalb der Marke 13, wie in den Fig. 6 b) und 6 c) dargestellt.

Der Abstand der flexiblen Verbindungselemente 19 zur Oberseite 30 des Schaftes 18 wird bevorzugter Weise sehr gering, z. B. 5 mm oder 2 mm oder 1 mm oder besonders bevorzugter Weise 0 mm gewählt, um die seitliche Auslenkung der als Reflektionsschicht für den Abstandssensor dienenden Schicht 21 bei Auslenkung des Antastformelementes 3 möglichst gering zu halten.

Fig. 6 d) zeigt eine alternative Anordnung der farbselektiven Schicht 21 auf der abgeflachten Oberseite 32 der Marke 13. Eine Anordnung der farbselektiven Schicht 21 auf der abgeflachten Oberseite des Antastformelementes 3 ist alternativ möglich.

Den Fig. 6 e) und f) sind eine alternative Anordnung einer neutralen Umlenk- und Teilerschicht an einem Prisma 33 zu entnehmen, welches mit dem Schaft 18 oder der Marke 13 verbunden ist. An der entsprechenden Verbindungsstelle 21a befindet sich die farbselektive Schicht 21, die auf dem oberen Ende des Schaftes 18 oder der Unterseite des Prismas 33 aufgebracht ist.

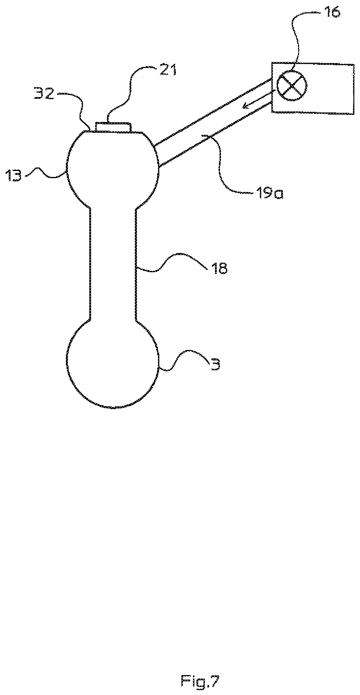

In Fig. 7 ist eine alternative Befestigung des Schaftes 18 dargestellt. Ein flexibles Verbindungselement 19a ist dazu seitlich an der Marke 13 befestigt, z.B. angeklebt oder angespleißt oder bildet eine Einheit mit der Marke 13. Alternativ kann das flexible Verbindungselement 19a auch am Schaft 18 oder dem Antastformelement 3 in gleicher Weise befestigt sein. Das Antastformelement 3 oder - wie in der Figur dargestellt - die Marke 13 weist eine abgeflachte Oberseite 32 mit farbselektiver Schicht 21 auf. Alternativ wird an dem flexiblen Verbindungselement 19a eine Lichtquelle 16 befestigt, die Licht in die Marke 13 oder das Antastformelement 3 oder den Schaft 18 einkoppelt, wodurch die Position der Marke 13 oder des Antastformelementes 3 mit dem Bildverarbeitungssensor ausgewertet werden kann. Die Schicht 21 kann in diesem Fall auch nicht farbselektiv ausgelegt sein, also sämtliches Licht reflektieren.

Der Fig. 8 ist eine bevorzugte Ausführungsform der flexiblen Verbindungselemente 19 und einer Haltestruktur 20 in der Draufsicht, also in Richtung der Achse des Schaftes 18, entnehmbar. Durch die schmale Ausführung der flexiblen Verbindungselemente 19 und deren Anordnung außerhalb der Fokusebene des Bildverarbeitungssensors 4 kann die Messung mit dem Bildverarbeitungssensor 4 die Ebene der flexiblen Verbindungselemente 19 optisch durchdringen und nahezu unbeeinflusst von den flexiblen Verbindungselemente 19 erfolgen. Die Anordnung und Dimensionierung der flexiblen Verbindungselemente 19 ermöglicht zudem eine nahezu gleiche mechanische Steifigkeit bei der Auslenkung des Antastformelementes 3 in zumindest zwei oder auch drei Achsen. Zudem werden wahlweise zusätzlich vorzugsweise sechs mechano-elektrische Sensorelemente 34 wie beispielsweise Dehnmessstreifen oder piezoresisitive Sensorelemente auf die flexiblen Verbindungselemente 19 aufgebracht oder in diese integriert, um eine Bestimmung der Bewegung des Antastformelementes in einem oder mehreren Freiheitsgraden zusätzlich zur Messung mit dem Bildverarbeitungssensor 4 zu ermöglichen.

In Fig. 9 ist eine zweite Ausführungsform der flexiblen Verbindungselemente 19 und der Haltestruktur 20 dargestellt. Mechano-elektrische Sensorelemente 34 können ebenso wahlweise auf die flexiblen Verbindungselemente 19 aufgebracht oder in diese integriert werden.

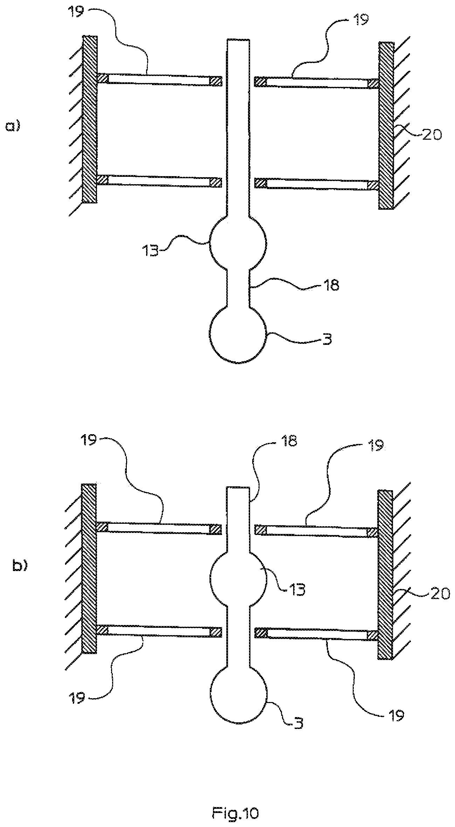

Aus der Fig. 10 wird eine weitere Ausführungsform der flexiblen Verbindungselemente 19 und Haltestruktur 20 erkennbar, bei der die flexiblen Verbindungselemente 19 in zwei Ebenen übereinander angeordnet und mit dem Schaft 18 verbunden sind. Durch die entsprechende Parallelfederführung wird gewährleistet, dass bei Auslenkung des Antastformelementes 3 in Richtung der Achse 18a des Schaftes 18 nahezu keine Verschiebung des Antastformelementes 3 und des Schaftes 18 in den Richtungen quer zur Achse 18a des Schaftes 18 erfolgt. Durch entsprechende Dimensionierung der flexiblen Verbindungselemente 19 können auch sämtliche rotatorischen Freiheitsgrade gesperrt werden. Die Anordnung der flexiblen Verbindungselemente 19 erfolgt vollständig oberhalb der gegebenenfalls vorhandenen Marke 13, wie Fig. 10 a) verdeutlicht, oder teilweise zwischen der Marke 13 und dem Antastformelement 3, wie Fig. 10 b) zeigt. Alternativ ist auch eine Anordnung der flexiblen Verbindungselemente 19 vollständig unterhalb der Marke 13 möglich.

Fig. 11 zeigt Ausführungsformen der Anordnung mehrerer zu erfassender Marken 13a. Diese werden durch den ersten Strahlengang 28 des Bilderverarbeitungssensors 4 mit großem Sehfeld gleichzeitig erfasst, wie in Figur 11 a), b) und c) erkennbar ist. Dadurch kann neben der lateralen Verschiebung quer zur Achse des Schaftes 18 die Verdrehung des Antastformelementes 3 um die Achse 18a des Schaftes 18 ermittelt werden. Zusätzlich kann ein Abstandsensor 15 eingesetzt werden, wie in Fig. 11a) gezeigt, der die Auslenkung der Marke 13 in Richtung der Achse 18a des Schaftes 18 ermittelt.

Auch kann die Auslenkung quer zur Achse 18a des Schaftes durch Fokussierung der Marke 13b mit dem zweiten Strahlengang 27 abweichenden Arbeitsabstandes durch den Bildverarbeitungssensor 4 ermittelt werden (s. Fig. 11 c).

Die Bestimmung der Auslenkung der Marken 13a kann (s. Fig. 11a) auch mit einem oder mehreren weiteren im Bildverarbeitungssensor 4 integrierten Abstandssensoren 15a erfolgen, beispielsweise einem Autofokussensor, der den gleichen Strahlengang wie der Bildverarbeitungssensor 4 und vorzugsweise die Messwerte zumindest eines oder mehrerer Teile der Sensorfläche der Kamera des Bildverarbeitungssensors 4 verwendet. Dadurch werden die Verkippungen des Schaftes 18 und des Antastformelementes 3 um die rechtwinklig zur Achse 18a des Schaftes 18 liegenden Achsen bestimmt. Wie in Fig. 11 a) gezeigt, wird das Antastformelement 3 seitlich angeordnet, um Messungen von Hinterschnitten oder waagerecht liegenden Geometrien zu ermöglichen. Alternativ können entsprechende seitliche Verlängerungen an allen Marken 13a angebracht werden.

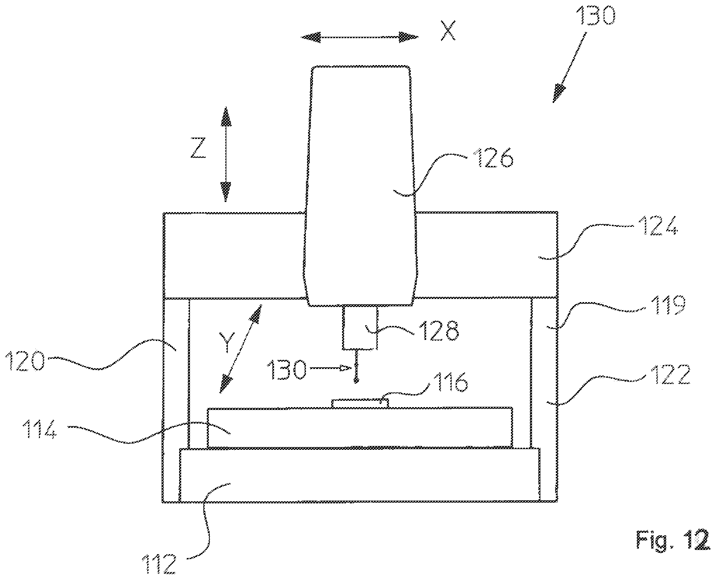

In Fig. 12 ist rein prinzipiell eine Ausführungsform eines Multisensor-Koordinatenmessgerätes 130 dargestellt. Die Sensoren können wahlweise montiert oder demontiert werden oder über entsprechende Sensorwechselsysteme auch während des Betriebes automatisch ein- und ausgewechselt werden. Selbstverständlich wird die Erfindung nicht verlassen, wenn eine entsprechende Anzahl von ausgewählten Sensoren fest auf dem Gerät montiert gelassen wird, um in dieser Konfiguration Objekte zu messen.

Unabhängig hiervon weist die Sensorik zumindest einen auch als ersten Sensor bezeichneten Sensor auf, um ein optisch-laterales Messverfahren durchzuführen, also insbesondere einen 2D-Bildverarbeitungssensor. Hierdurch soll die laterale Auslenkung eines Antastformelementes oder einer dieser zugeordneten Marke beim Messen eines Werkstückes 116 erfasst werden, wie dies zuvor beschrieben worden ist. Die Sensorik weist des Weiteren einen Abstandssensor, insbesondere in Form eines absolut messenden Heterodyninterferometers auf, um in Z-Richtung des Koordinatenmessgerätes das Antastformelement bzw. die dieser zugeordneten Marke zu messen, d. h. dessen bzw. deren Position

Das hinlänglich bekannte und noch einmal in der Fig. 12 wiedergegebene Prinzip eines Koordinatenmessgerätes 130 umfasst einen z. B. aus Granit bestehenden Grundrahmen 112 mit Messtisch 114, auf dem das zu messende Objekt (Werkstück 116) positioniert wird, um dessen Oberflächeneigenschaften zu messen.

Entlang dem Grundrahmen 112 ist ein Portal 119 in Y-Richtung verstellbar. Hierzu sind Säulen oder Ständer 120, 122 gleitend am Grundrahmen 112 abgestützt. Von den Säulen 120, 122 geht eine Traverse 124 aus, entlang der ein Schlitten verfahrbar ist, der seinerseits eine Pinole oder Säule 126 aufnimmt, die in Z-Richtung verstellbar ist. Von der Pinole 126 bzw. gegebenenfalls einer mit der Pinole 126 verbundenen Wechselschnittstelle 128 geht ein taktiler Sensor 130 aus, um unter Einbeziehung des Bildverarbeitungssensors taktil-optisch zu messen. Insoweit wird jedoch auf hinlänglich bekannte Techniken verwiesen. Ferner befindet sich in der Pinole 126 der Abstandssensor.

Nicht dargestellt ist in der Prinzipdarstellung der Fig. 12 die die flexiblen Verbindungselemente umfassende Halterung für den taktilen Sensor 130, der über die Halterung mit der Wechselschnittstelle 128 verbunden sein kann.

## Patentansprüche

1. Verfahren zur Bestimmung von Strukturen und/oder einer Geometrie eines Objektes, wie Werkstücks, in einem Koordinatenmessgerät mittels eines taktil-optischen Messverfahrens, wobei die Position eines von einer Tasterverlängerung (10, 18) ausgehenden Antastformelements (3) oder zumindest einer diesem zugeordneten von der Tasterverlängerung ausgehenden ersten Marke (13) in X- und Y-Richtung des Koordinatenmessgerätes mittels eines ersten Sensors (4) mit einem optisch lateral messenden Messverfahren und die Position des Antastformelementes oder zumindest der diesem zugeordneten ersten Marke in zumindest einer zu der X- und Y-Richtung senkrecht verlaufenden Z-Richtung des Koordinatenmessgeräts mit zumindest einem Abstandssensor (5, 15) bestimmt werden,
**dadurch gekennzeichnet,**
**dass** zur Befestigung der Tasterverlängerung (10, 18) in einer Halterung (20) zumindest ein flexibles Verbindungselement (19) verwendet wird, das vom Strahlengang des ersten Sensors in Strahlrichtung durchdrungen wird, wobei das zumindest eine flexible Verbindungselement transparent ist oder in Bezug auf den ersten Sensor (4) stark defokussiert angeordnet wird, und dass in der X-, Y-Richtung Position des Antastformelementes oder der ersten Marke und zur Messung in der Z-Richtung die Position einer Marke bestimmt werden, die zu dem Antastformelement bzw. der ersten Marke beabstandet angeordnet wird.

2. Verfahren nach Anspruch 1,
**dadurch gekennzeichnet,**
**dass** als optisch lateral messendes Verfahren eine 2D-Bildverarbeitung verwendet wird.

3. Verfahren nach Anspruch 1 oder 2,
**dadurch gekennzeichnet,**
**dass** als Abstandssensor ein Sensor aus der Gruppe Interferometer, Laserabstandssensor, Sensor nach dem Fokusprinzip, Autofokussensor, Bildverarbeitungssensor verwendet wird.

4. Verfahren nach zumindest Anspruch 3,
**dadurch gekennzeichnet,**
**dass** als Interferometer ein absolut messendes Heterodyninterferometer verwendet wird.

5. Verfahren nach zumindest einem der vorhergehenden Ansprüche,
**dadurch gekennzeichnet,**
**dass** die Position des Antastformelementes oder zumindest der diesem zugeordneten Marke in zwei Richtungen, wie X- und Y-Richtung des Koordinatenmessgerätes, mit einem optisch lateral messenden Verfahren, vorzugsweise Bildverarbeitungssensor mit Matrixkamera wie CCD- oder CMOS-Kamera, und in der dritten Richtung, wie Z-Richtung des Koordinatenmessgerätes, mit einem Abstandssensor bestimmt wird.

6. Anordnung zur Bestimmung von Strukturen und/oder einer Geometrie eines Objektes, wie Werkstücks, in einem Koordinatenmessgerät mit einem taktil-optischen Messverfahren umfassend
ein von einer Tasterverlängerung (10, 18) ausgehendes Antastformelement (3), einen ersten Sensor (4), der geeignet ist, die Position des Antastformelementes oder zumindest einer dem Antastformelement zugeordneten ersten Marke (13) in X- und Y-Richtung des Koordinatenmessgerätes mit einem optisch lateral messenden Verfahren zu bestimmen,
einen Abstandssensor (15), der geeignet ist, die Position des Antastformelements oder der ersten Marke in zumindest einer zu der X- und Y-Richtung senkrecht verlaufenden Z-Richtung zu bestimmen,
ein Auswertesystem, das geeignet ist, aus den Messdaten oder -signalen des Abstandssensors (15) und den Messdaten des ersten Sensors (4) die dreidimensionale Position des Antastformelementes (3) oder der ersten Marke (13) zu bestimmen,
**dadurch gekennzeichnet,**
**dass** die Anordnung eine Halterung (20) für zumindest ein flexibles Verbindungselement (19) aufweist, dass die Tasterverlängerung (10, 18) des Antastformelements (3) über das zumindest eine Verbindungselement (19) befestigt ist, und dass das zumindest eine Verbindungselement derart angeordnet ist, das es vom Strahlengang des ersten Sensors (4) in Strahlrichtung durchdrungen wird, wobei das zumindest eine Verbindungselement transparent ist und/oder in Bezug auf den ersten Sensor stark defokussiert angeordnet ist.

7. Anordnung nach Anspruch 6,
**dadurch gekennzeichnet,**
**dass** der für das optisch lateral messende Verfahren eingesetzte erste Sensor ein 2D-Bildverarbeitungssensor (4) ist.

8. Anordnung nach Anspruch 6,
**dadurch gekennzeichnet,**
**dass** der Abstandssensor (15) ein Sensor aus der Gruppe Interferometer (5), Laserabstandssensor, Sensor nach dem Fokusprinzip, Autofokussensor, Bildverarbeitungssensor ist.

9. Anordnung nach zumindest einem der Ansprüche 6 oder 8,
**dadurch gekennzeichnet,**
**dass** das Interferometer (5) ein absolut messendes Heterodyninterferometer ist.

## Claims

1. A method for the determining of structures and/or geometry of an object such as a workpiece in a coordinate measuring device by a tactile, optical measuring method, whereby the position of a touching form element (3) extending from a probe extension (10, 18) or at least of a first mark (13) extending from the probe extension and associated with the latter is determined in the X- and Y-direction of the coordinate measuring device by a first sensor (4) with an optically laterally measuring method and the position of the touching form element or at least of the first mark associated with the latter is determined in at least one Z direction of the coordinate measuring device perpendicular to the X- and Y-direction with at least one distance sensor (5, 15),
**characterized in that**
in order to fasten the probe extension (10, 18) in a holder (20) at least one flexible connecting element (19) is used that is passed through by the beam path of the first sensor in the direction of the beam, wherein the at least one flexible connecting element is transparent or is arranged in a strongly defocused manner relative to the first sensor, and that in the X-, Y-direction position of the touching form element or of the first mark and for measuring in the Z-direction the position of a mark is determined, which is arranged at a distance from the touching form element and/or the first mark.

2. The method according to claim 1,
**characterized in that**
a 2-D image processing is used as optically laterally measuring method.

3. The method according to claim 1 or claim 2,
**characterized in that**
a sensor from the group of interferometer, laser distance sensor, sensor according to the focus principle, autofocus sensor, image processing sensor is used as distance sensor.

4. The method according to claim 3,
**characterized in that**
an absolutely measuring heterodyne interferometer is used as interferometer.

5. The method according to at least one of the previous claims,
**characterized in that**
the position of the touching form element or at least of the mark associated with the latter is determined in two directions such as the X direction and the Y direction of the coordinate measuring device with an optically laterally measuring method, preferably an image processing sensor with a matrix camera such as a CCD camera or CMOS camera, and in the third direction such as the Z direction with a distance sensor.

6. An arrangement for the determining of structures and/or geometry of an object such as a workpiece in a coordinate measuring device with a tactile, optical measuring method, comprising a touching form element (3) extending from a probe extension (10, 18),
a first sensor (4) capable of determining the position of a touching form element or at least of a first mark associated with the latter in the X-direction and Y-direction of the coordinate measuring device by a optically laterally measuring method,
a distance sensor (15) capable of determining the position of the touching form element or the first mark in at least one Z-direction perpendicular for the X- and Y-direction coordinate measuring device,
an evaluation system capable for determining the three-dimensional position of the touching form element or of the first mark from the measurement data or the measurement signals of the distance sensor (15) and the measurement data of the first sensor,
**characterized in that**
the arrangement comprises a holder (20) for at least one flexible connecting element (19), that the probe extension (10, 18) of the touching form element (3) is fastened via at least one flexible connecting element (19), and that the at least one connecting element is arranged in such a way that it is passed through by the beam path of the first sensor (4) in the direction of the beam, wherein the at least one connecting element is transparent and/or is arranged in a strongly defocused manner relative to the first sensor.

7. The arrangement according to claim 6,
**characterized in that**
the first sensor used for the optically laterally measuring method is a 2-D image processing sensor (4).

8. The arrangement according to claim 6,
**characterized in that**
the distance sensor (15) is a sensor from the group of interferometer (5), laser distance sensor, sensor according to the focus principle, autofocus sensor, image processing sensor.

9. The arrangement according to claim 6 or claim 8,
**characterized in that**
the interferometer (5) is an absolutely measuring heterodyne interferometer.

## Revendications

1. Procédé de détermination de structures et/ou d'une géométrie d'un objet, telle une pièce d'oeuvre, dans un appareil de mesure de coordonnées au moyen d'un procédé de mesure tactile-optique, sachant que la position d'un élément palpeur façonné (3) partant d'une extension de palpeur (10, 18) ou au moins d'une première marque (13) partant de l'extension du palpeur et associée à l'élément palpeur façonné est déterminée dans la direction X et Y de l'appareil de mesure de coordonnées au moyen d'un premier capteur (4) à l'aide d'un procédé de mesure latérale optique et que la position de l'élément palpeur façonné ou au moins de la première marque associée à celui-ci est déterminée dans au moins une direction Z de l'appareil de mesure de coordonnées, perpendiculaire à la direction X et à la direction Y au moyen d'au moins un capteur de distance (5, 15).
**caractérisé en ce**
**qu'**est utilisé, pour fixer l'extension du palpeur (10, 18) dans un support (20), au moins un élément de liaison souple (19) qui est traversée par la trajectoire du faisceau du premier capteur dans le sens du faisceau, sachant que ledit au moins un élément de liaison souple est transparent ou est disposé fortement défocalisé par rapport au premier capteur (4), et que dans la direction X, Y, est déterminée la position de l'élément palpeur façonné ou de la première marque et, pour la mesure dans la direction Z, est déterminée la position d'une marque qui est disposée espacée de l'élément palpeur façonné ou de la première marque.

2. Procédé selon la revendication 1,
**caractérisé en ce**
**qu'**un traitement d'images 2D est employé comme procédé de mesure latérale optique.

3. Procédé selon la revendication 1 ou 2,
caractérisé en ce
en qu'un capteur appartenant au groupe des interféromètres, capteurs laser de distance, capteurs selon le principe de mise au point, capteurs autofocus, capteurs de traitement d'images est employé comme capteur de distance.

4. Procédé selon au moins la revendication 3,
**caractérisé en ce**
**qu'**un interféromètre hétérodyne à mesure absolue est employé comme interféromètre.

5. Procédé selon au moins une des revendications précédentes,
**caractérisé en ce**
**que** la position de l'élément palpeur façonné ou d'au moins la marque associée à celui-ci est déterminée dans deux directions, telles que la direction X et la direction Y de l'appareil de mesure de coordonnées, à l'aide d'un procédé de mesure latérale optique, de préférence un capteur de traitement d'images avec caméra matricielle telle que caméra CCD ou CMOS et dans la troisième direction, telle que la direction Z de l'appareil de mesure de coordonnées, à l'aide d'un capteur de distance.

6. Dispositif de détermination des structures et/ou d'une géométrie d'un objet, telle une pièce d'oeuvre, dans un appareil de mesure de coordonnées à l'aide d'un procédé de mesure tactile-optique, comprenant
un élément palpeur façonné (3) partant d'une extension de palpeur (10, 18), un premier capteur (4) qui est approprié pour déterminer la position de l'élément palpeur façonné ou d'au moins une première marque (13) associée à l'élément palpeur façonné dans la direction X et la direction Y de l'appareil de mesure de coordonnées, à l'aide d'un procédé de mesure latérale optique,
un capteur de distance (15) qui est approprié pour déterminer la position de l'élément palpeur façonné ou de la première marque dans au moins une direction Z perpendiculaire à la direction X et à la direction Y,
un système d'évaluation qui est approprié pour déterminer la position tridimensionnelle de l'élément palpeur façonné (3) ou de la première marque (13) à partir des données ou des signaux de mesure du capteur de distance (15) et des données de mesure du premier capteur (4), **caractérisé en ce**
**que** le dispositif présente un support (20) pour au moins un élément de liaison souple (19), que l'extension de palpeur (10, 18) de l'élément palpeur façonné (3) est fixée au moyen dudit au moins un élément de liaison (19) et que ledit au moins un élément de liaison est disposé de sorte à être traversé par la trajectoire du faisceau du premier capteur (4) dans le sens du faisceau, sachant que ledit au moins un élément de liaison est transparent et/ou est disposé fortement défocalisé par rapport au premier capteur.

7. Dispositif selon la revendication 6,
**caractérisé en ce**
**que** le premier capteur employé pour le procédé de mesure latérale optique est un capteur de traitement d'images 2D (4).

8. Dispositif selon la revendication 6,
**caractérisé en ce**
**que** le capteur de distance (15) est un capteur appartenant au groupe des interféromètres (5), capteurs laser de distance, capteurs selon le principe de mise au point, capteurs autofocus, capteurs de traitement d'images.

9. Dispositif selon une des revendications 6 ou 8,
**caractérisé en ce**
**que** l'interféromètre (5) est un interféromètre hétérodyne à mesure absolue.
